# EUROPEAN PATENT SPECIFICATION

(11) **EP 0 779 425 B1**
(45) Date of publication and mention of the grant of the patent: **21.11.2001**
(21) Application number: 96120000.3
(22) Date of filing: 12.12.1996
(51) Int. Cl.: F02D 41/06, F02D 41/38, F02D 41/40

(54) **Fuel injection control method for starting an electronically controlled diesel engine**
Kraftstoffeinspritzungssteuerungsverfahren zum Anlassen eines elektronisch geregelten Dieselmotors
Méthode de commande de l'injection pour le démarrage d'un moteur diesel contrôle électroniquement

(30) Priority: 14.12.1995 JP 32605195
(43) Date of publication of application: 18.06.1997
(73) Proprietor: TOYOTA JIDOSHA KABUSHIKI KAISHA, Aichi-ken (JP)
(72) Inventor: Yoshiyasu, Itoh, Toyota-shi, Aichi-ken (JP); Yokoi, Tatsuhisa, Toyota-shi, Aichi-ken (JP); Asakawa, Yasunori, Kariya-City, Aichi-Pref. 448 (JP)
(74) Representative: Tiedtke, Harro, Dipl.-Ing.

(56) References cited:
- US-A- 4 651 699
- US-A- 4 714 068
- US-A- 4 928 642
- US-A- 5 261 374
- PATENT ABSTRACTS OF JAPAN vol. 009, no. 179 (M-399), 24 July 1985 & JP 60 047843 A (ISUZU JIDOSHA KK), 15 March 1985
- TOYOTA: "Land Cruiser Prado New Car Features", May 1996, ,

## Description

### BACKGROUND OF THE INVENTION

### 1. Field of the Invention

The present invention relates to a fuel injection control method for starting an electronically controlled diesel engine and, more specifically, to a fuel injection control method suitable for controlling a spill valve which opens or closes a high pressure chamber of a fuel injection pump at a start time of an electronically controlled diesel engine.

### 2. Description of the Related Art

Document US-A-4 714 068 discloses a method and device for controlling a fuel injection quantity of an electronically controlled diesel engine. This conventional electronically controlled diesel engine (hereinafter referred to as simply a diesel engine) comprises a fuel injection pump and a spill valve. The fuel injection pump is responsive to a rotational angle of a crank of the diesel engine to periodically pressurize a fuel supplied thereto. The spill valve is provided for opening or closing a high pressure chamber of the fuel injection pump.

In the above-mentioned diesel engine, when the spill valve opens the high pressure chamber, that is, when the spill valve is open, pressure in the high pressure chamber is not increased when the fuel pump is operated. Thus, under such a condition, no fuel is injected to cylinders of the diesel engine when the fuel injection pump is continuously operated. On the other hand, when the spill valve closes the high pressure chamber, that is, when the spill valve is closed, pressure in the high pressure chamber is increased as the fuel pump is operated. Thus, under such a condition, fuel is injected to cylinders of the diesel engine in response to the operation of the fuel injection pump.

As mentioned-above, in the conventional diesel engine, switching between a condition where the fuel injection is permitted and a condition where the fuel injection is not permitted can be performed by controlling an opening and closing of the spill valve. Thus, an appropriate fuel injection control can be achieved in response to operating conditions of the diesel engine by controlling the operation of the spill valve.

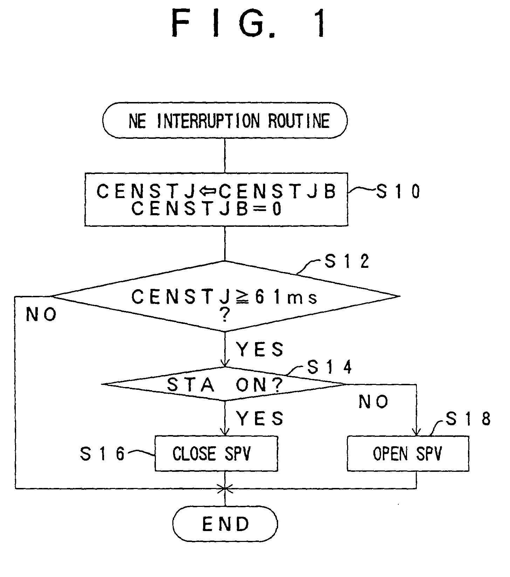

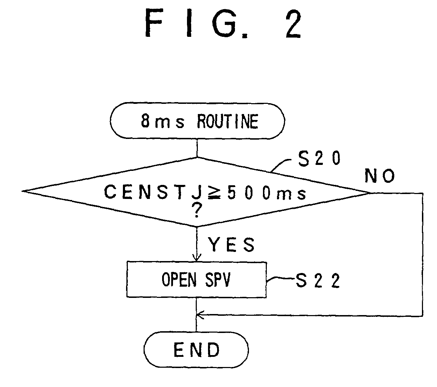

A description will now be given, with reference to FIGS.1 and 2, of a control operation of a conventional diesel engine which is incorporated in the "Land Cruiser", manufactured by TOYOTA. FIG.1 is a flowchart of a control routine performed to establish a preferred condition for starting the diesel engine when the revolution speed of the diesel engine is extremely low at start time. The conventional diesel engine has a revolution detecting sensor which generates and outputs a pulse signal each time the diesel engine crank rotates by a predetermined angle. The control routine shown in FIG.1 is started each time the pulse signal is output from the revolution detecting sensor.

When the control routine of FIG.1 is started, a value of an engine stall counter (en-st counter) CENSTJB is stored, in step S10, in a memory CENSTJ, and then the en-st counter CENSTJB is reset to "0". The en-st counter is started to increment at the time the ignition switch (IG switch) of the engine is turned on. The upper limit of the en-st counter is, for example, 500 msec. Since the en-st counter CENSTJB is reset each time the control routine is started, a time period between the generation of the last pulse signal and the generation of the current pulse signal is stored in the memory CENSTJ.

Thereafter, in step S12, it is determined whether or not the time period value stored in the memory CENSTJ is equal to or more than a predetermined value, for example, 61 msec. The condition CENSTJ≥61 msec is established when an engine revolution speed NE is equal to or less than 31 rpm. Thus, when the above-mentioned condition is established, it is determined that the diesel engine is operated at an extremely low revolution speed as compared to a normal revolution speed.

If the condition of step S12 is not established, it is determined that the diesel engine is not operated at an extremely low revolution speed. In this case, no process will be performed, and the control routine is ended. On the other hand, if the condition of step S12 is established, the control routine proceeds to step S14 to determine whether or not a starter switch is turned on. If the starter switch is turned on, it is determined that the diesel engine is operated at an extremely low revolution speed during a start time of the diesel engine.

At the start time of the diesel engine, the engine is maintained to operate normally at a revolution speed higher than the revolution speed of 31 rpm. Accordingly, the establishment of the condition of step S14 is limited to a case where the capability of a battery is extremely low or there is a disadvantageous condition for starting the diesel engine. In such a case, the spill valve is closed (turned on) in step S16, and the routine is ended. After the spill valve is closed, the fuel injection pump is enabled to continuously inject fuel to the diesel engine. Thus, the fuel injection pump can supply a large amount of fuel to the diesel engine. Accordingly, the diesel engine is set in a condition where the diesel engine can be easily started.

If it is determined, in step S14, that the starter switch is not turned on, the extremely low revolution speed condition is established as a condition which excludes a start time of the diesel engine. The establishment of the extremely low revolution speed condition is limited to the time when the engine is being stopped. Accordingly, when such a determination is made, there is no need to establish a preferred condition for starting the diesel engine. In this case, the spill valve is opened (turned off) in step S18, and the control routine is ended.

As mentioned above, in the conventional diesel engine, when a disadvantageous condition is established for a start of the diesel engine, such as a condition where the capability of the battery is decreased, an advantageous condition for starting of the diesel engine can be established by maintaining the spill valve in a closed state.

When the diesel engine is started by a battery of low capability or low starting capacity , the diesel engine may stall after the starting operation of the engine is started. If the diesel engine stalls when the spill valve is closed in the above-mentioned step S16, no pulse signal is supplied thereafter, and the control routine shown in FIG.1 is started. Thus, the spill valve is continuously closed after the starter switch is turned off.

The spill valve provided on a diesel engine is required to be open at a start time in order to reduce exhaust smoke generated in the starting operation. FIG.2 is a flowchart of a control routine for satisfying such a requirement in the conventional diesel engine. The control routine shown in FIG.2 is started every 8 msec, for example.

When the control routine shown in FIG.2 is started, it is determined, in step S20, whether or not a value stored in the memory CENSTJ is equal to or greater than 500 msec. The value of the en-st counter CENSTJB was stored in step S10 of the above-maintained control routine shown in FIG.1. Additionally, the upper limit value of 500 msec is stored when the value of the en-st counter reaches the upper limit. Thus, if the diesel engine stalls, the condition of S20 is established.

If the condition of step S20 is not established, it is determined that no engine stall has occurred in the diesel engine. In this case, no process will be performed thereafter, and the control routine is ended. On the other hand, if the condition of step S20 is established, it is determined that an engine stall has occurred. In this case, the routine proceeds to step S22 to open the spill valve, and the routine is ended.

According to the above-mentioned control routines performed in the conventional diesel engine, the spill valve is positively opened when an engine stall occurs in the diesel engine. Accordingly, the diesel engine is started in the condition where the spill valve is maintained open, resulting in the establishment of an advantageous condition for the start of the diesel engine.

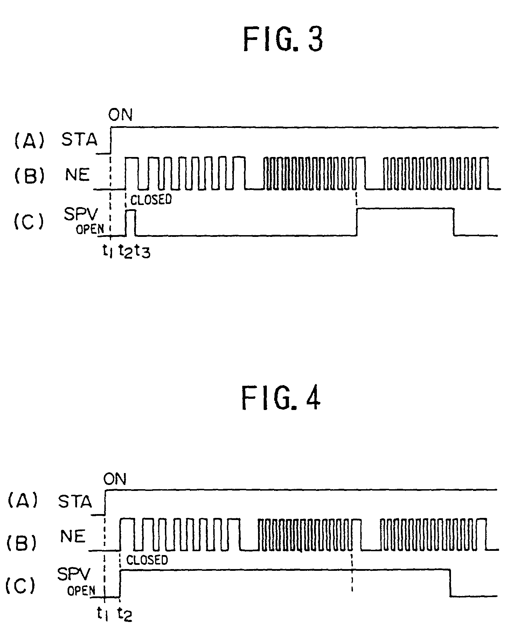

FIG.3 is a time chart for representing a normal starting condition of the conventional diesel engine. FIG.3-(A) shows a condition of the starter switch; FIG.3-(B) shows a condition of the pulse signal output by the revolution detecting sensor; and FIG.3-(C) shows a condition of the spill valve.

At start time of a diesel engine, it is recommended to turn on the starter switch when a glow plug is sufficiently heated after the IG switch is turned on. The above-mentioned conventional diesel engine has a glow indicator which is turned off when the glow plug is sufficiently heated. Accordingly, in the conventional diesel engine, the starter switch should be turned on after the glow indicator is turned off.

Normally, it takes a time period, which is sufficiently longer than 500 msec, from the time when the IG switch is turned on to the time when the glow indicator is turned off. In FIG.3, the starter switch is turned on at a time t1 which is later than 500 msec after the IG switch is turned on.

Under such a condition, the en-st counter CENSTJB reaches the upper limit of 500 msec before the pulse signal generated by the revolution detecting sensor is detected at time t2. Additionally, 500 msec is stored in the memory CENSTJ. When the control routine shown in FIG.1 is performed, the conditions of steps S12 and S14 are established, and the spill valve is closed. Thereafter, when the spill valve is opened at a time t3, the condition of step S20 is established, and the spill valve is opened again.

Thus, in the conventional diesel engine, the starter switch is turned on after the glow indicator is turned off, and the spill valve is temporarily closed for a short period of time after the first pulse signal is detected as shown in FIG.3-(C). Although the spill valve is not required to be closed when the diesel engine is started at a normal condition, there is not problem due to closing of the spill valve if the time period for closing the spill valve is an extremely short time. Thus, if the diesel engine is always started in the condition shown in FIG.3, there is no need to improve the spill valve control method at a start time.

However, in the above-mentioned diesel engine, if the starter switch is turned on before the glow indicator is turned off after the IG switch is turned on, the spill valve may be maintained in the open state unnecessarily for a long period of time.

FIG.4 is a time chart for representing a condition of the conventional diesel engine when the diesel engine is started in a condition where the spill valve is maintained closed at a start time of the diesel engine. FIG.4-(A) shows a condition of the starter switch; FIG.4-(B) shows a condition of the pulse signal output by the revolution detecting sensor; and FIG.4-(C) shows a condition of the spill valve.

The condition shown by FIG.4 is established when the time t2 at which the first pulse signal is detected after 61 msec has passed since the IG switch was turned on and before 500 msec is passed. Under such a condition, when the control routine shown in FIG.1 is started after the first pulse signal is detected, the conditions of steps S12 and S14 are established, and the spill valve is closed. On the other hand, in the control routine shown in FIG.2 which is started after the control routine of FIG.1, it is determined that the condition of step S20 is not established. Accordingly, the spill valve is not opened by the control routine shown in FIG.2. Thus, when the starter switch is maintained in an on state and when the diesel engine is started at a normal condition, the closed state of the spill valve continues until the spill valve is opened by a normal fuel injection control as shown in FIG.4-(C).

As mentioned above, if the spill valve is maintained to be closed when the diesel engine is started at the normal condition, an excessive amount of fuel may be injected into the diesel engine. In order to reduce exhaust smoke generated at the start time, it is preferred to reduce unnecessary fuel supplied to the diesel engine. In this respect, the above-mentioned diesel engine has a problem in that a large amount of exhaust smoke is generated when the starter switch is turned on before the glow indicator is turned off.

### SUMMARY OF THE INVENTION

It is a general object of the present invention to provide an improved and useful fuel injection control method in which the above-mentioned problem is eliminated.

A more specific object of the present invention is to provide a fuel injection control method which can reduce generation of exhaust smoke by preventing an unnecessary opening of a spill valve after an ignition switch is turned on during starting of an electronically operated diesel engine.

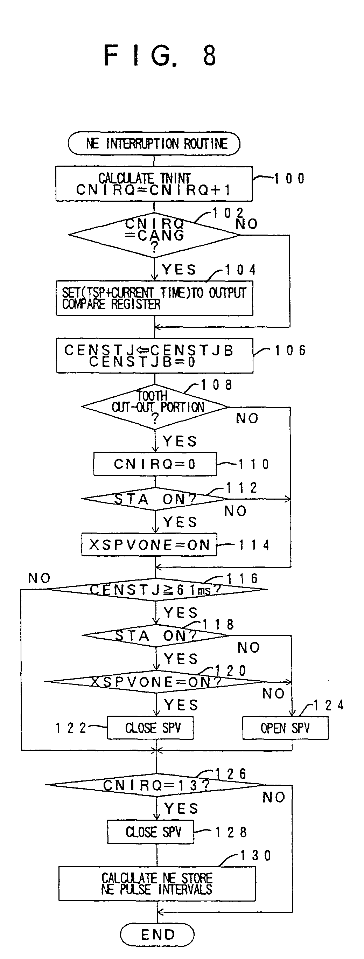

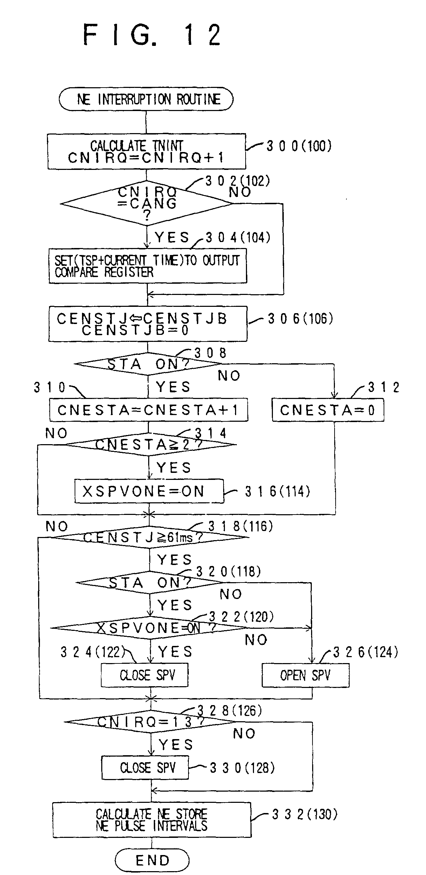

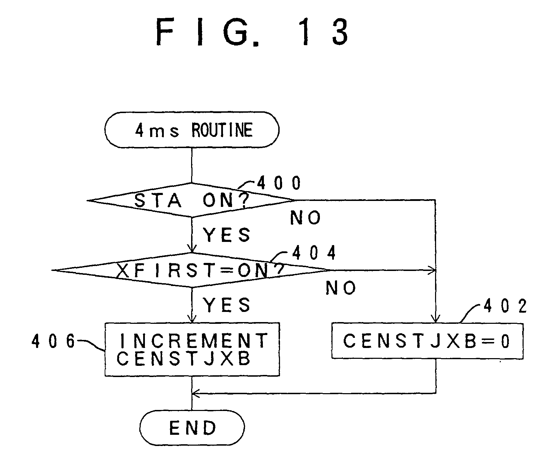

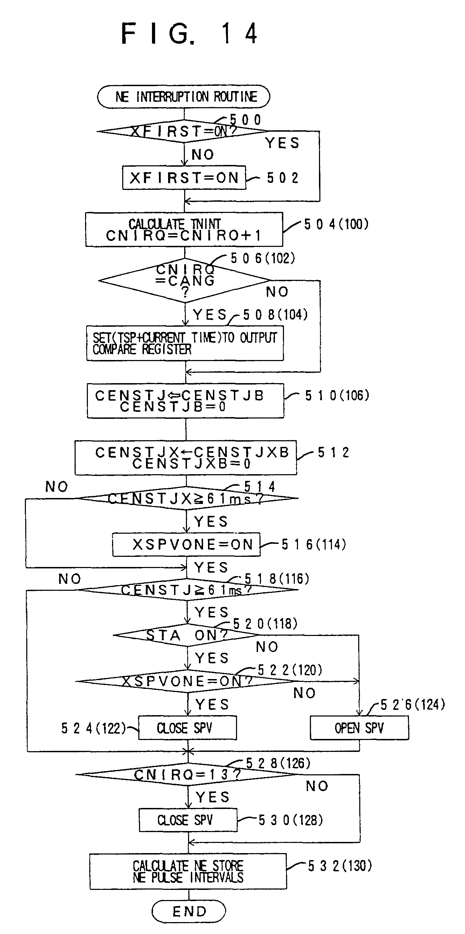

In order to achieve the above-mentioned objects, there is provided according to the present invention a fuel injection control method for starting an electronically controlled diesel engine (2), the diesel engine (2) comprising:
a fuel injection pump (1) having a spill valve (23) returning fuel to an inlet side of the fuel injection pump (1) by being open so that the fuel is injected to the diesel engine (2) only when the spill valve (23) is closed;
a pulse signal generating mechanism (7, 35) for generating and outputting a pulse signal each time a crank shaft (40) of the diesel engine (2) rotates a predetermined angle; and
a counter (CENSTJB) counting a time period from a time when a starting operation of the diesel engine (2) is started, the counter being reset to a predetermined reset value each time the pulse signal is detected,
the fuel injection control method comprising the steps of:
   a) determining whether a difference between the time period indicated by the counter (CENSTJB) and the predetermined reset value exceeds a predetermined time value when the pulse signal is detected (step 116 of FIG.8; step 318 of FIG.12; step 518 of FIG.14); and
   b) closing the spill valve (23) when the difference exceeds the predetermined time value (step 122 of FIG.8; step 324 of FIG.12; step 524 of FIG.14);
      the fuel injection control method further comprises the step of:
   c) prohibiting execution of step b) until the time period indicated by the counter (CENSTJB) indicates an interval between two adjacent pulse signals, which are both generated by the pulse signal generating mechanism (7, 35) (steps 106, 108, 114 and 120 of FIG.8; steps 308-316 and 322 of FIG.12; steps 402-406 of FIG.13 and steps 500, 502 and 512-516 of FIG.14).

According to the present invention, the pulse signals are output from the pulse signal generating mechanism each time the crank shaft rotates a predetermined angle. The counter is reset each time the pulse signal is output or detected. Thus, the difference between the time period indicated by the counter and the predetermined reset value, which may be "0", is increased in response to the passage of time after the counter is reset. In step a), it is determined whether or not the difference between the time period indicated by the counter and the predetermined reset value exceeds a predetermined time value when the pulse signal is detected. The spill valve is controlled by the determination of step a). That is, the spill valve is closed if it is determined that the difference obtained in step a) exceeds a predetermined time value. In the characterized step c) of the present invention, execution of step b) is prohibited until the time period indicated by the counter indicates an interval between two adjacent pulse signals, which are both generated by the pulse signal generating mechanism. Thus, the spill valve is not closed by the time value of the counter obtained when the first pulse signal is detected after the starting operation of the diesel engine is started. This is because the time value of the counter obtained when the first pulse signal is detected after the starting operation of the diesel engine was started does not indicate an interval between two adjacent pulse signals, which are both generated by the pulse signal generating mechanism.

One embodiment of the present invention is characterized in that step c) comprises the step of:
c-1) prohibiting execution of step b) until at least two pulse signals are detected (steps 106, 108, 114 and 120 of FIG.8; steps 308-316 and 322 of FIG.12; steps 402-406 of FIG.13 and steps 500, 502 and 512-516 of FIG.14).

In this invention, the determination of step a) is performed when the second or later pulse signal is detected. Thus, the difference between the time period indicated by the counter and the predetermined reset value positively indicates a true interval of adjacent pulse signals. This prevents an erroneous opening of the spill valve due to the time period which corresponds to a time period from the time a starting operation of the diesel engine occurs to the time when the first signal is detected.

In the present invention, the pulse signal generating mechanism may generate no pulse signal during a time period corresponding to a predetermined angle range of the crank shaft, and
characterized in that:
step c-1) includes the steps of:
c-1-1) memorizing the time value of the counter as a last time value at a time when the pulse signal is detected (step 106 of FIG.8);
c-1-2) comparing the last time value memorized at the last time with the current time value of the counter so as to determine whether a ratio of the current time value to the last time value exceeds a predetermined ratio (step 108 of FIG.8); and
c-1-3) prohibiting execution of step b) until the ratio obtained in step c-1-2) exceeds the predetermined ratio (steps 114 and 120 of FIG.8).

In this invention the predetermined angle range corresponds to a tooth cut-out portion provided in the pulse signal generating mechanism. If a ratio of the current interval to a last interval of the pulse signals exceeds a predetermined ratio, the current interval can be determined to correspond to the tooth cut-out portion. Thus, if the tooth cut-opt portion is detected, it is determined that at least two pulse signals are positively detected after the starting operation of the diesel engine is started. Additionally, if the spill valve is permitted to be closed based on the detection of two pulse signals, there may be an erroneous determination since there is a possibility that two pulse signals are recognized when a noise similar to a pulse signal is generated before the second pulse signal is detected. In this invention, the spill valve is permitted to be closed only when the ratio of the current time period to the last time period exceeds the predetermined ratio. This reduces influence of a noise similar to the pulse signal so that an erroneous closing of the spill valve is prevented.

Another embodiment according to the present invention is characterized in that step c) comprises the step of:
c-2) rendering the time period counted by the counter (CENSTJB) to be an effective time period after at least one pulse signal is detected after the starting operation of the diesel engine (2) was started (steps 402-406 of FIG.13 and steps 500, 502 and 512-526 of FIG.14), and
wherein the difference of step a) is obtained based on the effective time period and the predetermined reset value.

In this invention, the time period counted by the counter is rendered an effective time period after at least one pulse signal is detected after the starting operation of the diesel engine was started. This means that the effective time period positively corresponds to an interval of adjacent pulse signals. Thus, the spill valve is closed when the time period indicated by the counter positively corresponds to an interval of adjacent signals.

Other objects, features and advantages of the present invention will become more apparent from the following detailed description when read in conjunction with the accompanying drawings.

### BRIEF DESCRIPTION OF THE DRAWINGS

FIG.1 is a flowchart of a control routine performed to establish a preferred condition for starting a conventional diesel engine when the revolution speed of the diesel engine is extremely low at a start time;
FIG.2 is a flowchart of a control routine for opening a spill valve when the conventional diesel engine is started;
FIG.3 is a time chart for explaining a condition of the conventional diesel engine when the diesel engine is started in a normal condition;
FIG.4 is a time chart for explaining a condition of the conventional diesel engine when the diesel engine is started in a condition where the spill valve is maintained to be closed at a start time of the diesel engine;

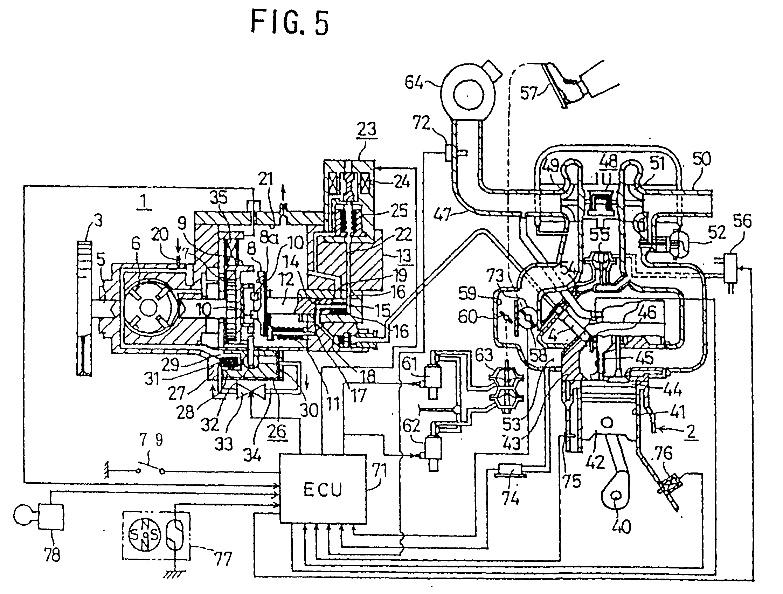

FIG.5 is an illustration showing a structure of a fuel injection control apparatus according to the embodiment of the present invention, the fuel injection control apparatus cooperating with a diesel engine having a supercharger;

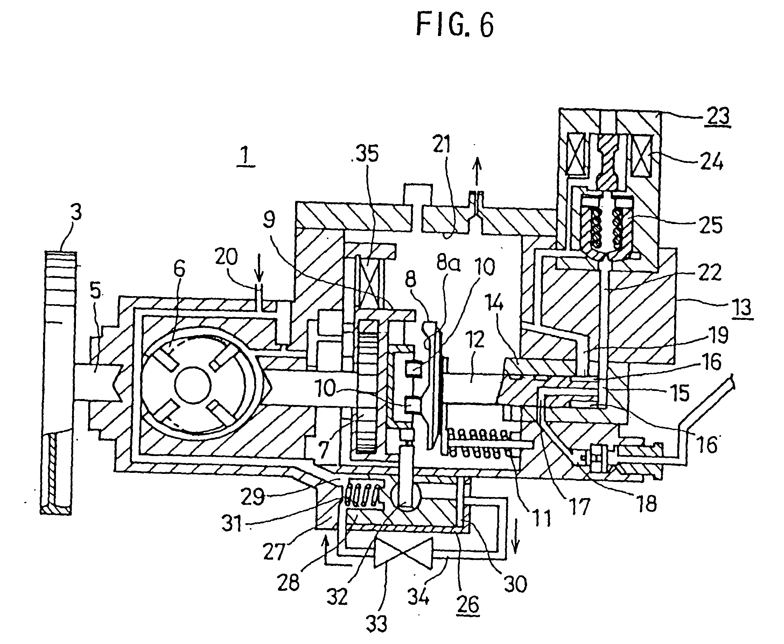

FIG.6 is an enlarged cross-sectional view of a distributor type fuel injection pump shown in FIG.1;

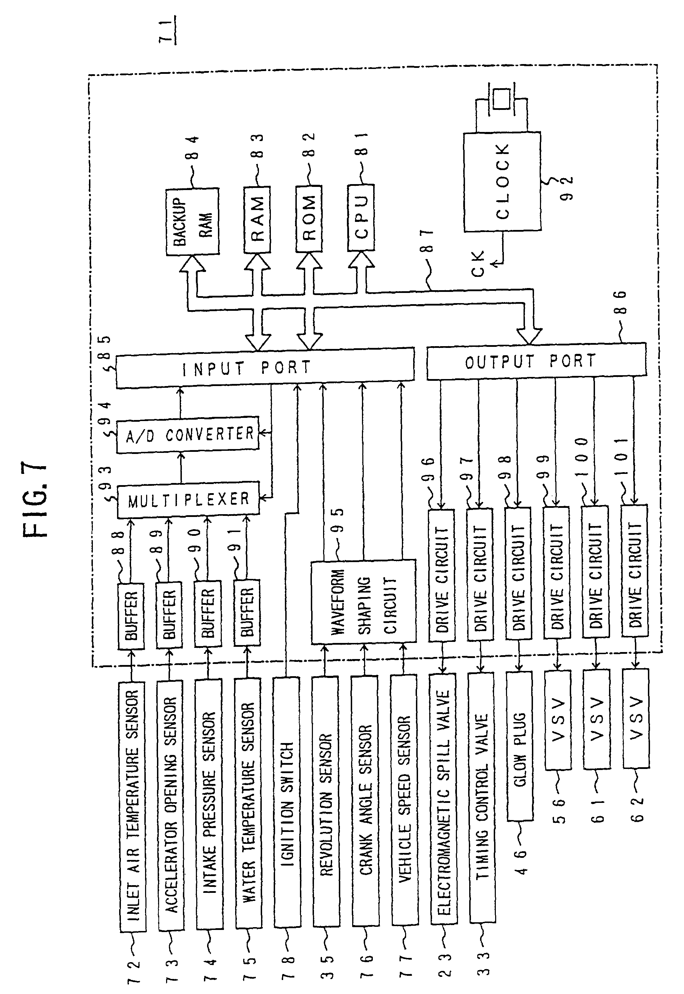

FIG.7 is a block diagram of an engine control unit shown in FIG.1;
FIG.8 is a flowchart of a main control routine according a first embodiment of the present invention;

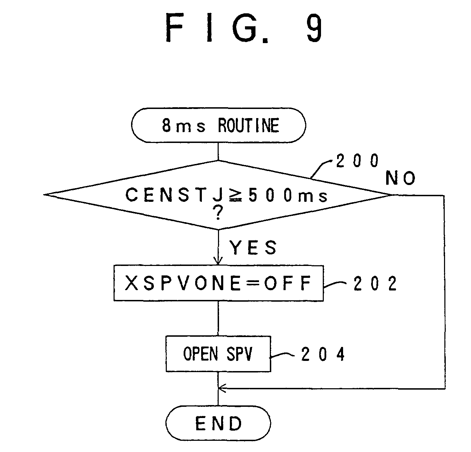

FIG.9 is a flowchart of a control routine to open a spill valve when the diesel engine is stalled;

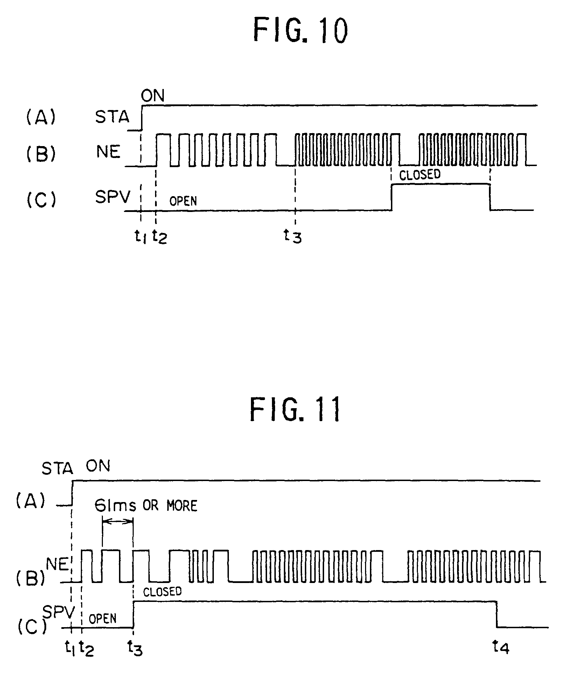

FIG.10 is a time chart for explaining a condition of the diesel engine shown in FIG.5 when the diesel engine is started immediately after a starter switch is turned on;
FIG.11 is a time chart for explaining a condition of the diesel engine shown in FIG.5 when the diesel engine is started in a condition where a cranking is performed at an extremely low speed and a fuel injection is performed after the starter switch was turned on;
FIG.12 is a flowchart of a main control routine according to a second embodiment of the present invention;
FIG.13 is a flowchart of a control routine to increment a counter CENSTJXB; and
FIG.14 is a flowchart of a main control routine according to a third embodiment of the present invention.

### DETAILED DESCRIPTION OF THE PREFERRED EMBODIMENTS

A description will now be given of a first embodiment according to the present invention. FIG.5 is an illustration showing a structure of a fuel injection control apparatus according to the first embodiment of the present invention, the fuel injection control apparatus cooperating with a diesel engine having a supercharger. FIG.6 is an enlarged cross-sectional view of a distributor type fuel injection pump 1 shown in FIG.5.

The fuel injection pump 1 has a drive pulley 3 coupled with the crank shaft 40 of the diesel engine 2 via a pulley belt (not shown in the figures). The fuel injection pump 1 is driven when the drive pulley 3 is rotated. Fuel is delivered to a fuel injection nozzle 4 provided for each cylinder of the diesel engine 2, and the fuel is injected into each engine cylinder. In this case, the diesel engine 2 has four engine cylinders.

The drive pulley 3 of the fuel injection pump 1 is mounted on an end of a drive shaft 5. A fuel feed pump 6 is provided in the middle of the drive shaft 5. It should be noted that the fuel feed pump 6 is shown in a 90 degrees turned view in FIGS.1 and 2 for easy understanding. Additionally, a disk-like pulser 7 is mounted on an inner end of the drive shaft 5. The pulser 7 has a plurality of protrusions or teeth on an outer circumference thereof, the protrusions or teeth being arranged at equal angle intervals. Hereinafter, the protrusions or teeth are simply referred to as teeth. In the present case, four tooth cut-out parts are formed at equal angle intervals. The tooth cut-out part is a portion of the outer periphery of the pulser 7 in which a tooth or teeth are not formed. The number of tooth cut-out parts corresponds to the number of engine cylinders. The inner end of the drive shaft 5 is connected to a cam plate 8 via a coupling (not shown in the figures).

A roller ring 9 is provided between the pulser 7 and the cam plate 8. A plurality of cam rollers 10 are mounted on a roller ring 9 along a circumference so that the cam rollers 10 face cam faces 8a formed on the cam plate 8. The number of cam faces 8a is equal to the number of engine cylinders of the diesel engine 2. The cam plate 8 is pressed against the cam rollers 10 by a spring 11.

The cam plate 8 is fixed to an end of a plunger 12 which pressurizes fuel introduced into a cylinder 14. The cam plate 8 and the plunger 12 are jointly rotated by rotation of the drive shaft 5. That is, a rotational force of the drive shaft 5 is transmitted to the cam plate 8 via a coupling. The cam plate 8 engages with the cam rollers 10 while it is rotated. Thus, the cam plate 8 reciprocates in an axial direction of the drive shaft 5 while it is rotated by the drive shaft 5. Accordingly, the plunger 12 assembled with the cam plate 8 reciprocates in the cylinder 14 while it is rotated. More specifically, when the cam faces 8a of the cam plate 8 ride on the cam rollers 10 of the cam roller 9, the plunger 12 is moved forward, and when the cam faces 8a ride off from the cam rollers 10, the plunger 12 is moved backward.

The plunger 12 is inserted into the cylinder 14 formed in a pump housing 13. A high-pressure chamber 15 is formed between an end surface of the plunger 12 and a bottom surface of the cylinder 14. An outer surface of the plunger 12 near the end thereof is provided with a plurality of grooves 16 and a distribution port 17. A plurality of distribution passages 18 and an inlet port 19 are provided in the pump housing 13 to form a fuel passage from the inlet side to the outlet side.

When the fuel feed pump 6 is driven by rotation of the drive shaft 5, fuel is supplied to a fuel chamber 21 from a fuel tank (not shown in the figures) via a fuel supply port 20. The fuel in the fuel chamber 21 is introduced into the high-pressure chamber 15 when the plunger 12 is moved backward and one of the grooves 16 connects to the inlet port 19. The fuel introduced into the high-pressure chamber 15 is pressurized by the forward movement of the plunger 12, and the pressurized fuel is delivered to the fuel injection nozzle 4 via one of the distributor passages 18.

The pump housing 13 is provided with a spill passage 22 for spilling the fuel by allowing the high-pressure chamber 15 to communicate with the fuel chamber 21. An electromagnetic spill valve 23 which serves as a valve for adjusting the spill of the fuel from the high-pressure chamber 15 is provided in the spill passage 22. The electromagnetic spill valve 23 is a normally opened valve. When a coil 24 is not energized (i.e. in an OFF state), a valve body 25 is open so that the fuel in the high-pressure chamber 15 is spilled to the fuel chamber 21. When the coil 24 is energized (i.e. in an ON state), the valve body 25 is closed so that the fuel is prevented from spilling from the high-pressure chamber 15 to the fuel chamber 21.

The electromagnetic spill valve 23 is opened or closed in response to the timing control which energizes the coil 24 of the electromagnetic spill valve 23. In this way, the amount of fuel spilled from the high-pressure chamber 15 to the fuel chamber 21 is adjusted. By opening the electromagnetic spill valve 23 during a compression stroke (forward movement) of the plunger 12, the pressure of the fuel in the high-pressure chamber 15 is reduced, and the fuel injection from the fuel injection nozzle 4 is halted. That is, the fuel pressure in the high-pressure chamber 15 cannot be increased by moving the plunger 12 forward as long as the electromagnetic spill valve 23 is open. Hence, fuel injection from the fuel injection nozzle 4 does not take place. The amount of fuel injected from the fuel injection nozzle 4 is controlled by controlling the timing at which the electromagnetic spill valve 23 is opened or closed during the forward movement of the plunger 12.

A timer unit 26 (shown in a 90° turned view in FIGS. 5 and 6) for adjusting the timing of the fuel injection is provided below the pump housing 13. The timer unit 26 modifies the position of the roller ring 9 in the rotational direction of the drive shaft 5 so as to modify the timing at which the cam faces 8a are engaged with the cam rollers 10, that is, the timing of the reciprocating motion of the cam plate 8 and the plunger 12.

The timer unit 26 is hydraulically driven and comprises a timer housing 27, a timer piston 28 fitted in the housing 27, and a timer spring 31 which, provided in a low-pressure chamber 29 of the timer housing 27, urges the timer piston 28 toward a pressurized chamber 30. The timer piston 28 is connected to the roller ring 9 via a slide pin 32.

The fuel, which is pressurized by the fuel feed pump 6, is introduced into the pressurized chamber 30 of the timer housing 27. The position of the timer piston 28 is determined according to a balancing relationship between the fuel pressure and the urging force of the timer spring 31. As the position of the timer spring 28 is determined, the position of the roller ring 9 is determined, and thus the timing of the reciprocal motion of the cam plate 8 and the plunger 12 is determined.

A timing control valve 33 for adjusting the fuel pressure (that is, a control oil pressure) of the timer unit 26 is provided in the timer unit 26. The pressurized chamber 30 and the low-pressure chamber 29 of the timer housing 27 are allowed to communicate with each other via a communicating passage 34. The timing control valve 33 is provided in the communicating passage 34. The timing control valve 33 is an electromagnetic valve which is opened or closed in accordance with an energizing signal subject to duty control. Opening and closing of the timing control valve 33 adjusts the fuel pressure in the pressurized chamber 30. By adjusting the fuel pressure, the timing of the fuel injection from the fuel injection nozzle 4 as well as the lift timing of the plunger 12 is controlled.

A revolution sensor 35 comprising an electromagnetic pickup is provided above the roller ring 9 so as to face the periphery of the pulser 7. The revolution sensor 35 detects a variation in the magnetic flux as the teeth in the pulser 7 traverse a space below the revolution sensor 35. The revolution sensor 35 outputs a timing signal, that is, engine revolution pulses, corresponding to an engine speed NE. In other words, the revolution sensor 35 outputs a revolution-angle signal for each predetermined crank angle. Since the revolution sensor 35 is integral with the roller ring 9, the revolution sensor 35 outputs a reference timing signal at regular intervals with respect to the lift of the plunger 12, irrespective of the control operation of the timer unit 26. As has been described previously, since the revolution sensor 35 uses an electromagnetic pickup, the electromotive force generated in the pickup in the sensor becomes small during a low speed period, with the result that the engine revolution pulses cannot be output.

A description will now be given of the diesel engine 2. A main combustion chamber 44 corresponding to each of the engine cylinders of the diesel engine 2 comprises a cylinder 41, a piston 42 and a cylinder head 43. The main combustion chamber 44 is connected to a subsidiary combustion chamber 45 corresponding to each of the engine cylinders. The fuel injected from the respective fuel injection nozzle 4 is supplied to the subsidiary combustion chamber 45. The subsidiary combustion chamber 45 is provided with a known glow plug 46 as a start assisting device.

The diesel engine 2 is provided with an intake pipe 47 and an exhaust pipe 50. The intake pipe 47 is provided with a compressor 49 of a turbocharger 48 constituting a supercharger. The exhaust pipe 50 is provided with a turbine 51 of the turbocharger 48. The exhaust pipe 50 is also provided with a waste gate valve 52 for adjusting the supercharge pressure PIM.

As is know, the turbocharger 48 is configured such that the energy of the exhaust gas is utilized to rotate the turbine 51 and the compressor 49 coupled to the same shaft as the turbine 51 so as to increase the pressure of the intake air. Thus, a fuel-air mixture having a high density is fed to the main combustion chamber 44 so that a large amount of fuel is combusted and the output of the diesel engine 2 is increased.

The diesel engine 2 is provided with a recirculation pipe 54 for returning a portion of the exhaust gas in the exhaust pipe 50 to an intake port 53 of the intake pipe 47. An exhaust gas recirculation valve (EGR valve) 55 for adjusting the amount of recirculated exhaust gas is provided in the recirculation pipe 54. The EGR valve 55 is controlled by a vacuum switching valve (VSV) 56 so as to be opened or closed.

A throttle valve 58 which is opened and closed in cooperation with actuation of an accelerator pedal 57 is provided in the intake pipe 47. A bypass passage 59 is provided to be parallel with the throttle valve 58, and a bypass throttle valve 60 is provided in the bypass passage 59.

The bypass throttle valve 60 is controlled so as to be opened or closed by an actuator 63 having divided diaphragm chambers driven under the control of two VSVs 61 and 62. The bypass throttle valve 60 is opened or closed responsive to the running state of the diesel engine 2. For example, when the diesel engine 2 is in an idle running state, the bypass throttle valve 60 is half open in order to reduce undesired noise and oscillation. When the diesel engine 2 is in a normal running state, the bypass throttle valve 60 is fully open. When the operation of the diesel engine 2 is stopped, the bypass throttle valve 60 is closed so as to achieve a smooth stop of the diesel engine 2.

The fuel injection pump 1, the electromagnetic spill valve 23 provided in the diesel engine 2, the timing control valve 33, the glow plug 46 and the VSVs 56, 61 and 62 are electrically connected to an electronic control unit (hereinafter, referred to as ECU) 71. The ECU 71 controls the timing at which these components are driven.

In addition to the revolution sensor 35, various sensors such as the followings are provided so as to detect the running state of the diesel engine 2. An intake air temperature sensor 72 for detecting an inlet air temperature THA in the vicinity of an air cleaner 64 is provided in the intake pipe 47. An accelerator opening sensor 73 for detecting an accelerator opening degree ACCP corresponding to a load of the diesel engine 2 is provided at the throttle valve 58. In the vicinity of the intake port 53, an intake pressure sensor 74 for detecting the supercharge pressure PIM is provided, the supercharge pressure PIM being a pressure of the intake air supercharged by the turbocharger 48.

Further, a water temperature sensor 75 for detecting the temperature THW of a cooling water of the diesel engine 2, and an ignition switch 78 which is operated when the diesel engine is started or stopped are provided. A crank angle sensor 76 for detecting a rotational reference position of a crank shaft 40 of the diesel engine 2 is provided. For example, the crank angle sensor 76 detects the rotational position of the crank shaft 40 with respect to a top dead center of a specific engine cylinder. Further, there is provided a vehicle speed sensor 77 for detecting a vehicle speed SP by turning a lead switch 77b ON or OFF using a magnet 77a rotated by a gear of a transmission mechanism. An ignition switch (IG switch) 78 is provided which is turned on or off when the diesel engine 2 is started or stopped. Additionally, a starter switch 79 is provided for operating a starter motor at a start time of the diesel engine.

The sensors 72 - 77 are electrically connected to the ECU 71. The revolution sensor 35 is also electrically connected to the ECU 71. The ECU 71 controls the electromagnetic spill valve 23, the timing control valve 33, the glow plug 46 and the VSVs 56, 61 and 62 in accordance with a signal output from the sensors 35, 72-77.

A description will now be given, with reference to the block diagram of FIG.7, of a construction of the ECU 71. The ECU 71, as a logic circuit, comprises a central processing unit (CPU) 81; a read only memory (ROM) 82 which stores a predetermined control program or map; a random access memory (RAM) 83 which temporarily stores operation results of the CPU; a backup RAM 84 which stores predetermined data; a clock 92 which generates a predetermined clock signal; and a bus 87 which connects the CPU 81, the ROM 82, the RAM 83, the RAM 84 and the clock 92 to an input port 85 and an output port 86.

The intake air temperature sensor 72, the accelerator opening sensor 73, the intake pressure sensor 74 and the water temperature sensor 75 are connected to the input port 85 via respective buffers 88, 89, 90, 91, a multiplexer 93 and an A/D converter 94. Likewise, the revolution sensor 35, the crank angle sensor 76 and the vehicle speed sensor 77 are connected to the input port 85 via a waveform shaping circuit 95. The ignition switch 78 is also connected to the input port 85.

The CPU 81 reads detection signals from the sensors 35 and 72 - 77 via the input port 85. The electromagnetic spill valve 23, the timing control valve 33, the glow plug 46 and the VSVs 56, 61 and 62 are connected to the output port 86 via drive circuits 96, 97, 98, 99, 100 and 101, respectively. The CPU 81 controls the electromagnetic spill valve 23, the timing control valve 33, the glow plug 46 and the VSVs 56, 61 and 62 in accordance with input values read from the sensors 35 and 72 - 77.

The ECU 71 detects an operating condition of the diesel engine 2 based on output signals from the various sensors so as to calculate the fuel injection amount and the fuel injection timing in response to the detected operation condition. Additionally, the ECU 71 controls the spill valve 23 so as to achieve the calculated fuel injection amount and timing. An injection of fuel in the diesel engine 2 must be performed for each cylinder. Thus, the control of the spill valve must be preformed for each cylinder.

As mentioned-above, the pulser 7 is provided with tooth cut-out portions corresponding to the number of the cylinders in each revolution angle. These tooth cut-out portions are provided at predetermined positions, respectively, so that the tooth cut-out portions are detected when the plunger 12 reaches a reference position with respect to one of the cylinders. The ECU 71 recognizes that the plunger 12 reaches the reference position with respect to the plunger 12 when one of the tooth cut-out portions is detected by the revolution sensor 35. The ECU 71 sets a time when the fuel injection is stopped, that is, a time when the spill valve 23 is opened based on the time when the plunger 12 reaches the reference position. That is, the ECU 71 supplies a valve open instruction to the spill valve 23 when a predetermined time period has passed after the tooth cut-out portion is detected by the revolution sensor 35. According to the above-mentioned way, the end of a fuel injection time period can be accurately controlled, resulting in an accurate fuel injection amount control.

In order to start the diesel engine in a good condition, it is effective to maintain the spill valve 23 in a closed state at the start time of the diesel engine 2. However, as mentioned above, if the spill valve is maintained in the closed state, the diesel engine 2 may be set in the condition where a large amount of exhaust smoke is generated. In order to obtain a good startability while reducing the generation of exhaust smoke, it is preferred that the spill valve 23 is not maintained in the closed state at the start time when the diesel engine is easily started whereas the spill valve 23 is maintained at the closed state at the start time when the diesel engine 2 is not easily started.

In the present invention, the above requirement is satisfied when the diesel engine 2 is started in any condition. A description will now be given, with reference to FIG.8, of a first embodiment of a fuel injection control method according to the present invention. A flowchart of FIG.8 shows a fuel injection control process performed by the ECU 71. The fuel injection control process shown in FIG.8 is started each time the pulse signal is output from the revolution sensor 35. This process is hereinafter referred to as an NE interruption process.

When the NE interruption process shown in FIG.8 is started, an interval TNINT of the pulse signals is calculated, the interval TNINT being a time difference between the time when the pulse signal was detected in the last process and the time when the pulse signal was detected in the current process. Additionally, a counter CNIRQ is incremented. The pulser 7 has teeth (protrusions) at each predetermined angle, for example at every 11.25 degrees, and has tooth cut-out portions at predetermined angle intervals. When the revolution sensor 35 faces the teeth of the pulser 7, the interval TNINT is calculated as the time spent by the pulser 7 rotating 11.25 degrees. When the revolution sensor 35 faces the tooth cut-out portion, the interval TNINT is calculated as the time period spent by the pulser 7 rotating an angle corresponding to the tooth cut-out portion. The counter CNIRQ is cleared, as will be described later, each time the tooth cut-out potion is detected. Accordingly, the value of the counter CNIRQ corresponds to the number of the pulse signals output after the tooth cut-out potion is detected.

In step 102, it is determined whether or not the value of the counter CNIRQ has reached a count value CANG which is reversely calculated from the end time of a fuel injection. In the present embodiment, the end of a fuel injection is set based on the rotational angle of the diesel engine 2, that is, a rotational angle Θp of the pulser 7. The rotational angle Θp can be divided into an angle value "11,25*n" and a remainder angle "Θr". The angle value "11.25*n" is a value obtained by multiplying the pulse signal generating angle of 11.25 degrees by an integer n. The count value CANG is substituted by the greatest integer n which satisfies a relationship Θp≥11.25*n.

Accordingly, if it is determined, in step 102, that the counter CNIRQ is equal to the count value CANG, it is determined that the fuel injection reaches the end at the time when the pulser 7 rotates by the remainder angle Θr before the next pulse signal is detected. In this case, the routine proceeds to step 104. On the other hand, if it is determined, in step 102, that the counter CNIRQ is not equal to the count value CANG, it is determined that the end of the fuel injection will not be reached until the next pulse signal is detected. In this case, the process of step 104 is skipped, and the routine proceeds to step 106.

In step 104, a time period TSP is calculated which is used by the pulser to rotate the remainder angle Θr. Then, a time obtained by adding the time period TSP to the current time is set to an output compare register (not shown in the figures). Hereinafter, this time is referred to as a fuel injection end time. The time period TSP is calculated based on the remainder angle Θr and the angular velocity of the pulser 7 which is determined by the period of detection of the pulse signals. After the fuel injection end time is set to the output compare register, the spill valve 23 is opened at the time when the fuel injection end time is reached.

In step 106, the value of the en-st counter CENSTJB is stored in the memory CENSTJ. Then, the en-st counter CENSTJB is reset to "0". The en-st counter CENSTJB starts to increment when the IG switch is turned on with an upper limit of 500 msec. Additionally, the en-st counter CENSTJB is reset each time the control routine shown in FIG.8 is started. Thus, the memory CENSTJ stores a time period between the time when step 106 was executed in the last process and the time when step 106 is executed in the current process. That is, the memory CENSTJ stores a time period from the time when the last pulse signal was generated to the time when the current pulse signal was generated.

After the process of step 106 is completed, the routine proceeds to step 108. In step 108, it is determined whether or not a tooth cut-out portion is detected in the current process. Specifically, it is determined whether or not a ratio of the time stored in the memory CENSTJ in the last process to the time stored in the memory CENSTJ in the current process exceeds a predetermined value.

If the diesel engine 2 is maintaining a constant engine revolution NE, there is no large difference between the last pulse interval and the current pulse interval. Thus, under such a condition, it is determined that the condition of step 108 is not established. On the other hand, if there is a tooth cut-out portion between the protrusion causing the last pulse signal and the protrusion causing the current pulse signal, there is generated a large difference between the last pulse interval and the current pulse interval. Thus, the condition of step 108 is established immediately after the tooth cut-out portion of the pulser 7 faces the revolution sensor 35.

In the present embodiment, if the condition of step 108 is not established, it is determined that the tooth cut-out portion is not detected. In this case, steps 110 to 114 are skipped, and the routine proceeds to step 116. On the other hand, if the condition of step 108 is established, it is determined that a tooth cut-out portion is detected. In this case, the process of steps 110 to 114 is performed before the routine proceeds to step 116.

In step 110, the counter CNIRQ is reset to "0". Thereafter, the counter CNIRQ is incremented, in step 100, each time the pulse signal is generated. As mentioned-above, the fuel injection control for each of the cylinders is performed based on the value of the counter CNIRQ.

In step 112, it is determined whether or not the starter switch is turned on. If it is determined that the starter switch 79 is turned on, it is determined that the diesel engine 2 is in a cranking state. In this case, the routine proceeds to step 114 so as to set (turn on) a flag XSPVONE. On the other hand, if it is determined that the starter switch is not turned on, step 114 is skipped.

In the system of the present embodiment, when the diesel engine 2 is started, the IG switch 78 is turned on first, and then the starter switch 79 is turned on. When a tooth cut-out portion is detected after the starter switch 79 is turned on, both the conditions of step 108 and step 112 are established, and the flag XSPVONE is set. In order to determine, in step 108, that a tooth cut-out portion is detected, at least the last pulse interval and the current pulse interval must be detected.

The counter CENSTJB, which counts a time period corresponding to the pulse interval, starts to increase at the same time when the IG switch 78 is turned on. In order to obtain the last pulse interval and the current pulse interval, the routine shown in FIG.8 must be started at least twice. That is, at least two pulse signals must be output. Accordingly, in the control routine of FIG.8, the flag XSPVONE is not set after the diesel engine is started and until two pulse signals are detected.

It should be noted that, the time period from the time when the IG switch 78 is turned on and the time when the first pulse signal is output is remarkably long as compared to the normal pulse interval. Thus, the pulse interval obtained for the first pulse signal and the pulse interval obtained for the second pulse signal do not satisfy the recognition condition of the tooth cut-out condition, that is, "(current pulse interval)/(last pulse interval)≥a predetermined value". Accordingly, in order for the flag XSPVONE to be set in the present routine, at least three pulse signals must be detected after the IG switch is turned on.

Additionally, there is a possibility that a noise which is similar to a pulse signal generated by the revolution sensor 35 may be supplied to the ECU 71. If such a noise is supplied to the ECU 71, it is possible that the ECU 71 will recognize that two pulse signals have been supplied. However, in the present embodiment, when the two signals, a real pulse signal and a noise, do not satisfy the recognition condition of the tooth cut-out portion, the flag XSPVONE is not set. Thus, if the flag XSPVONE is set in the present routine, it can be recognized with high probability that at least two true pulse signals were detected after the IG switch was turned on.

The counting operation of the en-st counter CENSTJB is started immediately after the IG switch 78 is turned on. Thus, the time counted by the en-st counter CENSTJB at the time when the first pulse signal is detected is not a pulse interval but a time period from the time when the IG switch 78 is turned on to the time when the first pulse signal is detected. On the other hand, the time period counted by the en-st counter CENSTJB at the time when the second signal or later pulse is detected is positively a pulse interval.

Accordingly, in the present routine, if the flag XSPVONE is set, it is determined that the value of the en-st counter CENSTJB positively represents a pulse interval. After step 106, a process is performed by using the above-mentioned method for maintaining the spill valve 23 when the diesel engine 2 is truly in a condition in which starting of the diesel engine 2 is difficult.

In step 116, it is determined whether or not the value stored in the memory CENSTJ is equal to or greater than a predetermined time period, for example, 61 msec. In the diesel engine 2 according to the present embodiment, the condition "CENSTJ≥61 msec" is established when 1) 61 msec is passed after the IG switch 78 was turned on and until the first pulse signal is detected; 2) when the diesel engine 2 is in an engine stall condition; or 3) when the diesel engine 2 is operated at an extremely low speed.

If it is determined, in step 116, that the condition of step 116 is established, the routine proceeds to step 118. In step 118, it is determined whether or not the starter switch 79 is turned on. If the condition of step 116 is established and if the starter switch 79 is not turned on, it is determined that the diesel engine 2 is in the engine stall condition. In this case, the routine proceeds to step 124 to open the spill valve 23.

If is determined, in step 118, that the starter switch 79 is turned on, the routine proceeds to step 120. In step 120, it is determined whether or not the flag XSPVONE is set. If the flag XSPVONE is not set, there is a possibility that the value of the en-st counter CENSTJB is not a pulse interval, as discussed above. Accordingly, if such a determination is made, the routine proceeds to step 124 so as to open the spill valve 23.

On the other hand, if it is determined, in step 120, that the flag XSPVONE is set, it is determined that the value of the en-st counter CENSTJB indicates a pulse interval. Thus, when such a determination is made, it is determined that the diesel engine 2 is operated at an extremely low speed. In this case, the routine proceeds to step 122 so as to close the spill valve 23.

The engine revolution speed NE of the diesel engine 2 becomes a low speed to the extent to satisfy the condition of step 116 at a start time only when a special condition, such as a condition where battery capability is extremely down, is established. Under such a condition, if the spill valve 23 is maintained to be closed, the fuel injection pump is allowed to perform a full injection amount.

In a condition where the fuel injection pump 1 is able to perform the full injection amount, the amount of fuel injected in the diesel engine 2 is increased as compared to the normal injection. Thus, the diesel engine 2 can be easily started. Thus, according to the present routine, the condition of the diesel engine 2 can be improved to an advantageous condition where the diesel engine 2 can be easily started when the diesel engine 2 was set in the special condition where starting of diesel engine becomes difficult.

After the above process is completed, the routine proceeds to step 126. In step 126, it is determined whether or not the counter CNIRQ is equal to a predetermined value of 13. The predetermined number of 13 is a value corresponding to a rotational angle which is set for the time to start a fuel injection. If it is determined that the CNIRQ is equal to 13, the routine proceeds to step 128 so as to close the spill valve 23, and the routine proceeds to step 130. In step 130, the engine revolution speed NE is calculated and the pulse intervals detected in the current process are stored, and the routine is ended. On the other hand, if it is determined, in step 126, that the CNIRQ is not equal to 13, the process of steps 128 and 130 is skipped and the routine is ended.

As mentioned above, according to the present embodiment, the fuel injection pump 1 is not enabled to be conditioned to allow the full amount injection, which condition is caused by the time period from the time the IG switch 78 is turned on to the time when the first pulse signal is detected. Accordingly, in the present embodiment, the full amount injection is prevented from being unnecessarily performed when the diesel engine 2 is in a condition where a good start condition is established. In this respect, the present embodiment has an advantageous effect that the exhaust smoke is reduced at a start time.

When the diesel engine 2 goes into an engine stall condition, the pulse signal will never be input to the ECU 71. If the pulse signal is not input, the routine shown in FIG.8 may not be preformed, and thus the spill valve 23 may be maintained to be closed. Additionally, the flag XSPVONE may be maintained to be set. When the stalled diesel engine 2 is started again, it is preferred to open the spill valve 23 and to clear (turn off) the flag XSPVONE.

FIG.9 is a flowchart of a control routine performed by the ECU 71 to achieve the above-mentioned function. The control routine shown in FIG.9 is started, for example, every 8 msec. When the control routine shown in FIG.9 is started, it is determined, in step 200, whether or not the value stored in the memory CENSTJ is equal to or greater than 500 msec. In the process of the above-mentioned step 106, a value of the en-st counter CENSTJB is stored in the memory CENSTJ, and the upper limit of 500 msec is also stored in the memory CENSTJ when the en-st counter reaches the upper limit of 500 msec. Accordingly, if the diesel engine 2 is stalled, the upper limit of 500 msec will be consequently stored in the memory CENSTJ.

If the condition of step 200 is not established, it is determined that the diesel engine is not stalled. In this case, the control routine is ended without preforming any process. On the other hand, if the condition of step 200 is established, it is determined that the diesel engine 2 is stalled. In this case, the routine proceeds to step 202. In step 202, the flag XSPVONE is cleared (turned off). Then, in step 204, the spill valve 23 is opened, and the routine is ended. According to this control routine, the spill valve 23 is positively opened and the flag is cleared after the diesel engine if stalled and by the time the diesel engine 2 is restarted.

FIG.10 is a time chart for explaining a condition of the diesel engine 2 when the diesel engine 2 is started immediately after the starter switch 79 is turned on. FIG.10-(A) shows a condition of the starter switch 79; FIG.10-(B) shows a condition of the pulse signal output by the revolution sensor 35; and FIG.10-(C) shows a condition of the spill valve 23.

When the starter switch 79 is started t a time t1 as shown in FIG.10, an output of the pulse signals is started at a time t2 after a predetermined time delay. A relatively long period of time longer than the time period of 61 msec is passed by the time the first pulse signal is detected after the IG switch 78 was turned on. Accordingly, if the control routine shown in FIG.8 is started at the time t2, the conditions of the above-mentioned steps 116 and 118 are established. However, in the present embodiment, the flag XSPVONE is maintained to be cleared until a tooth cut-out portion is detected at a time t3. Thus, the spill valve 23 will not be closed before the time t3.

FIG.11 is a time chart for explaining a condition of the diesel engine 2 when the diesel engine 2 is started in a condition where a cranking is performed at an extremely low speed and a fuel injection is performed after the starter switch was turned on. FIG.11-(A) shows a condition of the starter switch 79; FIG.11-(B) shows a condition of the pulse signal output by the revolution sensor 35; and FIG.11-(C) shows a condition of the spill valve 23.

When battery capability is extremely low, cranking may be performed at an extremely low speed after the starter switch 79 is turned on. In this case, the engine revolution speed NE will be decreased as the cranking progresses. Under such a condition, there is a possibility that a condition indicating a detection of a tooth cut-out portion may be erroneously satisfied.

FIG.11 illustrates the condition in which the establishment of the tooth cut-out portion condition is made at the time t3 and, thus, the spill valve 23 is closed. When the spill valve 23 is closed, a full amount fuel injection is performed by the fuel injection pump 1 so that the diesel engine 2 is rendered to be in a condition where it is easily started. Due to the change in the condition of the diesel engine 2, the engine revolution speed NE will be increased, and finally it is determined that the engine revolution speed NE is not the extremely low speed. If such a determination is made, a normal control operation is started. In FIG.11, the spill valve 23 is opened at a time t4 which is set as an end time of a fuel injection by the normal fuel injection amount control.

According to the method for determining existence of a tooth cut-out portion used in the present embodiment, the possibility of an erroneous determination of the existence of a tooth cut-out portion is increased as the revolution speed of the diesel engine 2 is decreased. Accordingly, the present embodiment, in which the closing of the spill valve 23 is permitted based on a determination of the existence of a tooth cut-out portion, is hardly influenced by a noise similar to the pulse signal and has an advantage in that startability of the diesel engine 2 is improved.

A description will now be given of a second embodiment of the present invention. The second embodiment of the present invention is achieved by the ECU 71 performing the control routine of FIG.9 and a control routine shown in FIG.12. In the method according to the second embodiment of the present invention, a process progresses by determining that only the time period counted by the en-st counter CENSTJB is an effective value after the IG switch 78 is turned on and the first pulse signal is detected.

FIG.12 is a flowchart of a control routine performed by the ECU 71 to achieve the above-mentioned function. The control routine shown in FIG.12 is an NE interruption routine. In FIG.12, steps that are the same as the steps shown in FIG.8 are indicated by the same step numbers provided in parentheses, and descriptions thereof will be omitted.

In the control routine shown in FIG.12, the process of step 308 is performed after the process of step 306(106) is completed. In step 308, it is determined whether or not the starter switch 79 is turned on. If it is determined that the starter switch 79 is turned on, the routine proceeds to step 310 in which a counter CNESTA is incremented. On the other hand, if it is determined that the starter switch 79 is not turned on, the routine proceeds to step 312 in which the counter CNESTA is reset to "0". Accordingly, the count value of the counter CNESTA corresponds to the number of detections of the pulse signal after the starter switch 79 is turned on.

After the counter CNESTA is incremented in step 310, the routine proceeds to step 314. In step 314, it is determined whether or not the counter CNESTA is equal to or greater than 2 (CNESTA≥2). That is, in step 314, it is determined whether or not the pulse signal was detected twice or more after the IG switch 78 is turned on. As mentioned above, the counted time value of the en-st counter CENSTJB when the first pulse signal is detected is not a pulse interval but a time period from the time when the IG switch 78 is turned on to the time when the first pulse signal is detected.

Accordingly, when the condition of step 314 is established, it is determined that the value of the en-st counter CENSTJB is positively representing a pulse interval. If such a determination is made in the present routine, the routine proceeds to step 316(114) in which the flag XSPVONE is set (turned on), and the routine proceeds to step 318(116).

In the above-mentioned process according to the second embodiment of the present invention, a full fuel injection amount of the fuel injection pump 1 is prevented by the time period from the time when the IG switch 78 is turned on to the time when the first pulse signal is detected. Accordingly, the method according to the second embodiment reduces generation of exhaust smoke at a start time while a good startability is provided to the diesel engine 2.

A description will now be given of a third embodiment of the present invention. The third embodiment of the present invention is achieved by the ECU 71 performing the control routine of FIG.9 and a control routine shown in FIG.13 and further performing a control routine shown in FIG.14. In the method according to the third embodiment of the present invention, the spill valve 23 is controlled based on a value of a counter CENSTJXB which begins to be incremented after the IG switch 78 was turned on and the first pulse signal was detected by the revolution sensor 35.

FIG.13 is a flowchart of a control routine performed by the ECU 71 to increment the counter CENSTJXB. The control routine shown in FIG.13 is started each predetermined time period, for example, every 4 msec. When the control routine shown in FIG.13 is started, it is determined, in step 400, whether or not the starter switch 79 is turned on. If it is determined that the starter switch is not turned on, the routine proceeds to step 402 in which the counter CENSTJXB is reset to "0".

On the other hand, if it is determined, in step 400, that the starter switch is turned on, the routine proceeds to step 404 in which a flag XFIRST is set (turned on). The flag XFIRST is set when the revolution sensor 35 outputs the first pulse signal after a start operation of the diesel engine 2 is started. Accordingly, if the flag XFIRST is set (turned on), it is determined that the first pulse signal has not been output after the start operation is started.

If it is determined, in step 404, that the flag XFIRST is set, the routine proceeds to step 406. In step 406, the counter CENSTJXB is incremented, and the routine is ended. On the other hand, is it is determined that the counter XFIRST is not set, the routine proceeds to step 402 in which the counter CENSTJXB is reset. According to the above-mentioned process, the value of the counter CENSTJXB indicates the time period from the time when the starter switch 79 is turned on to the time when the first pulse signal is detected.

FIG.14 is a flowchart of a control routine performed by the ECU 71 to control the spill valve 23 based on the counter CENSTJXB. The control routine shown in FIG.14 is an NE interruption routine. In FIG.14, steps that are the same as the steps shown in FIG.8 are indicated by the same step numbers provided in parentheses, and descriptions thereof will be omitted.

When the control routine shown in FIG.14 is started, it is determined, in step 500, whether or not the flag XFIRST is set (turned on). The flag XFIRST is cleared (turned off) by an initialization process performed when the IG switch 78 is turned on. Accordingly, if the current process is started by the detection of the first pulse signal, it is determined that the flag XFIRST is not set. In this case, the routine proceeds to step 502 in which the counter XFIRST is set. On the other hand, if it is determined, in step 500, that the flag XFIRST is set, step 500 is skipped. According to the above-mentioned process, the flag XFIRST is not set after the diesel engine 2 is started and until the first pulse signal is detected. After the first pulse signal is detected, the flag XFIRST is set until the IG switch 78 is turned off.

Additionally, in the present routine, after the en-st counter CENSTJB is set and a count value of the counter CENSTJB is stored in the memory CENSTJ in step 510(106), the process of step 512 is performed. In step 512, the count value of the counter CENSTJXB, which indicates a time period from the time when the first pulse signal is detected, is stored in a memory CENSTJX. Additionally, in step 512, the counter CENSTJXB is reset to "0".

Thereafter it is determined, in step 514, whether or not the count value in the memory CENSTJX is equal to or greater that 61 msec. If the current process is started by the first pulse signal, the count value in the memory CENSTJX is "0". Accordingly, if it is determined that the condition "CENSTJX≥61 msec" is established, it is determined that at least two pulse signals were detected after the diesel engine 2 is started and a pulse interval equal to or greater than 61 msec is provided between the last pulse and the current pulse.

In the present routine, if it is determined that the condition of step 514 is satisfied, the routine proceeds to step 516(114) in which the flag XSPVONE is set. Thereafter, the routine proceeds to step 518(116) to perform the process after step 518(116). On the other hand, if the condition of step 514 is not satisfied, step 516(114) is skipped, and the process after step 518(116) is performed without changing the flag XSPVONE.

According to the control routine of the third embodiment, similar to the first and second embodiments of the present invention, the spill valve 23 is permitted to be closed during a cranking operation only when the flag XSPVONE is set (turned on). The flag XSPVONE is not set until at least two pulse signals are detected after the start operation of the diesel engine 2 is started. That is, the flag XSPVONE is not set until the count value of the en-st counter CENSTJB positively indicates a pulse interval.

In the above-mentioned process according to the third embodiment of the present invention, similar to the first and second embodiments, a full fuel injection amount of the fuel injection pump 1 is prevented which is caused by the time period from the time when the IG switch 78 is turned on to the time when the first pulse signal is detected. Accordingly, the method according to the third embodiment reduces generation of exhaust smoke at a start time while a good startability is provided to the diesel engine 2.

The present invention is not limited to the specifically disclosed embodiments, and variations and modifications may be made without departing from the scope of the present invention.

A fuel injection control method which can reduce generation of exhaust smoke by preventing an unnecessary opening of a spill valve (23) at a start time of an electronically operated diesel engine (2). A counter (CENSTJB) is provided for counting a time period from a time when a starting operation of the diesel engine (2) is started. The counter is reset to a predetermined reset value each time the pulse signal is detected. It is determined whether a difference between the time period indicated by the counter (CENSTJB) and the predetermined reset value exceeds a predetermined time value when the pulse signal is detected (step 116 of FIG.8; step 318 of FIG.12; step 518 of FIG.14). The spill valve (23) is closed when the difference exceeds the predetermined time value (step 122 of FIG.8; step 324 of FIG.12; step 524 of FIG.14). Execution of step b) is prohibited until the time period indicated by the counter (CENSTJB) indicates an interval between two adjacent pulse signals, which are both generated by the pulse signal generating mechanism (7, 35) (steps 106, 108, 114 and 120 of FIG.8; steps 308-316 and 322 of FIG.12; steps 402-406 of FIG.13 and steps 500, 502 and 512-516 of FIG.14).

## Claims

1. A fuel injection control method for starting an electronically controlled diesel engine (2), said diesel engine (2) comprising:
a fuel injection pump (1) having a spill valve (23) returning fuel to an inlet side of said fuel injection pump (1) by being open so that the fuel is injected to said diesel engine (2) only when said spill valve (23) is closed;
a pulse signal generating mechanism (7, 35) for generating and outputting a pulse signal each time a crank shaft (40) of said diesel engine (2) rotates a predetermined angle; and
a counter (CENSTJB) counting a time period from a time when a starting operation of said diesel engine (2) is started, said counter being reset to a predetermined reset value each time the pulse signal is detected,
said fuel injection control method comprising the steps of:
a) determining whether a difference between the time period indicated by said counter (CENSTJB) and the predetermined reset value exceeds a predetermined time value when the pulse signal is detected (step 116 of Fig. 8; step 318 of Fig. 12; step 518 of Fig. 14); and
b) closing said spill valve (23) when said difference exceeds said predetermined time value (step 122 of Fig. 8; step 324 of Fig. 12; step 524 of Fig. 14);
said fuel injection control method further comprises the step of:
c) prohibiting execution of step b) until the time period indicated by said counter (CENSTJB) indicates an interval between two adjacent pulse signals, which are both generated by the pulse signal generating mechanism (7, 35) (steps 106, 108, 114 and 120 of Fig. 8; steps 308-316 and 322 of Fig. 12; steps 402-406 of Fig. 13 and steps 500, 502 and 512-516 of Fig. 14).

2. The fuel injection control method as claimed in claim 1, **characterized in that** step c) comprises the step of:
c-1) prohibiting execution of step b) until at least two pulse signals are detected (steps 106, 108, 114 and 120 of FIG.8; steps 308-316 and 322 of FIG.12; steps 402-406 of FIG.13 and steps 500, 502 and 512-516 of FIG.14).

3. The fuel injection control method as claimed in claim 2, wherein said pulse signal generating mechanism (7, 35) generates no pulse signal during a time period corresponding to a predetermined angle range of said crank shaft (40),
**characterized in that**:
step c-1) includes the steps of:
c-1-1) memorizing the time value of said counter as a last time value at a time when the pulse signal is detected (step 106 of FIG.8);
c-1-2) comparing the last time value memorized at the last time with the current time value of said counter so as to determine whether a ratio of the current time value to the last time value exceeds a predetermined ratio (step 108 of FIG.8); and
c-1-3) prohibiting execution of step b) until said ratio obtained in step c-1-2) exceeds said predetermined ratio (steps 114 and 120 of FIG.8).

4. The fuel injection control method as claimed in claim 1, **characterized in that** step c) comprises the step of:
c-2) rendering the time period counted by said counter (CENSTJB) to be an effective time period after at least one pulse signal is detected after the starting operation of said diesel engine (2) was started (steps, 402-406 of FIG.13 and steps 500, 502 and 512-526 of FIG.14),
wherein said difference of step a) is obtained based on said effective time period and said predetermined reset value.

## Patentansprüche

1. Verfahren zum Steuern der Kraftstoff-Einspritzung, um einen elektronisch gesteuerten Dieselmotor (2) zu starten, wobei der Dieselmotor (2) besteht aus:
einer Kraftstoff-Einspritzpumpe (1) mit einem Überdruckventil (23), das Kraftstoff zur Einlass-Seite dieser Kraftstoff-Einspritzpumpe (1) zurückführt, wobei es geöffnet ist, so dass der Kraftstoff nur in den Dieselmotor (2) eingespritzt wird, wenn das Überdruckventil (23) geschlossen ist;
einem Impulsgenerator (7,35) zum Erzeugen und Abgeben eines Signalimpulses jedes Mal dann, wenn sich die Kurbelwelle (40) dieses Dieselmotors (2) um einen bestimmten Winkel gedreht hat; und
einem Zähler (CENSTJB), der die Zeitdauer von einem Zeitpunkt an, zu dem der Startvorgang dieses Dieselmotors begonnen hat, misst, wobei der Zähler, jedes Mal, wenn der Signalimpuls erkannt worden ist, auf einen vorbestimmten Wert zurückgesetzt wird,
wobei dieses Verfahren zum Steuern der Kraftstoff-Einspritzung aus folgenden Schritten besteht:
a) Bestimmen, ob die Differenz zwischen der Zeitdauer, die durch den Zähler (CENSTJB) angezeigt wird, und dem vorgegebenen Grundwert einen vorgegebenen Zeitwert, wenn der Signalimpuls erkannt worden ist, übersteigt (Schritt 116 nach Fig. 8; Schritt 318 nach Fig. 12; Schritt 518 nach Fig. 14; und
b) Schließen des Überdruckventils (23), wenn diese Differenz den vorgegebenen Zeitwert übersteigt (Schritt 122 nach Fig. 8; Schritt 324 nach Fig. 12; Schritt 524 nach Fig. 14);
wobei dieses Verfahren zum Steuern der Kraftstoff-Einspritzung aus dem weiteren Schritt besteht:
c) Unterdrücken des Ausführens von Schritt b) bis die Zeitdauer, die von dem Zähler (CENSTJB) angezeigt worden ist, ein Intervall zwischen zwei benachbarten Signalimpulsen anzeigt, die beide von dem Impulsgenerator (7, 35) erzeugt worden sind (Schritte 106, 108, 114 und 120 nach Fig. 8; Schritte 308-316 und 322 nach Fig. 12; Schritte 402-406 nach Fig. 13 und Schritte 500, 502 und 512-516 nach Fig. 14).

2. Verfahren zum Steuern der Kraftstoff-Einspritzung nach Anspruch 1, **dadurch gekennzeichnet, dass** Schritt c) aus folgendem Schritt besteht:
c-1) Unterdrücken des Ausführens von Schritt b) bis wenigstens zwei Signalimpulse erkannt worden sind (Schritte 308-316 und 322 nach Fig. 12; Schritte 402-406 nach Fig. 13 und Schritte 500, 502 und 512-516 nach Fig. 14).

3. Verfahren zum Steuern der Kraftstoff-Einspritzung nach Anspruch 2, wobei der Impulsgenerator (7, 35) während einer Zeitdauer, die mit einem vorgegebenen Drehwinkel der Kurbelwelle (40) übereinstimmt, keine zwei Signalimpulse erzeugt, **dadurch gekennzeichnet, dass** der Schritt c-1) folgende Schritte einschließt:
c-1-1) Speichern des Zeitwerts des Zählers als ein letzter Zeitwert, wenn der Signalimpuls erkannt worden ist (Schritt 106 nach Fig. 8);
c-1-2 Vergleich des letzten Zeitwerts, der zuletzt gespeichert worden ist, mit dem gegenwärtigen Zeitwert des Zählers, um so zu bestimmen, ob das Verhältnis von dem gegenwärtigen Zeitwert zu dem letzten Zeitwert ein bestimmtes Verhältnis übersteigt (Schritt 108 nach Fig. 14); und
c-1-3) Unterdrücken des Ausführens von Schritt b) bis das Verhältnis, das in Schritt c-1-2) erhalten worden ist, das vorgegebene Verhältnis übersteigt (Schritt 114 und 120 nach Fig. 8).

4. Verfahren zum Steuern der Kraftstoff-Einspritzung nach Anspruch 1, **dadurch gekennzeichnet, dass** der Schritt c) aus folgendem Schritt besteht:
c-2) Anwachsen lassen der Zeitdauer, die von dem Zähler (CENSTJB) gemessen worden ist, zu einer effektiven Zeitdauer, nachdem wenigstens ein Signalimpuls nach dem Starten des Dieselmotors (2) erkannt worden ist (Schritte 402-406 von Fig. 13 und Schritte 500, 502 und 512-526 von Fig. 14), wobei diese Differenz nach Schritt a), die auf besagtem effektiven Zeitwert und dem vorgegebenen Grundwert basiert, erhalten wurde.

## Revendications

1. Un procédé de contrôle d'injection de carburant pour démarrer un moteur Diesel (2) à contrôle électronique, ledit moteur Diesel (2) comprenant :
- une pompe (1) d'injection de carburant équipée d'une valve de décharge (23) retoumant le carburant à l'entrée de ladite pompe (1) d'injection de carburant en étant ouverte, de manière que le carburant soit injecté audit moteur Diesel (2) uniquement lorsque ladite valve de décharge (23) est fermée ;
- un mécanisme (7, 35) de génération de signal d'injection pour générer et fournir en sortie un signal d'impulsion chaque fois qu'un vilebrequin (40) dudit moteur à combustion interne (2) tourne d'un angle prédéterminé, et
- un compteur (CENSTJB) comptant une période de temps depuis l'instant où est déclenchée une opération de démarrage dudit moteur Diesel (2), ledit compteur étant remis à l'état initial, à une valeur de remise à l'état initial prédéterminée, chaque fois que le signal d'impulsion est détecté,
ledit procédé de contrôle d'injection de carburant comprenant les étapes consistant
a) à déterminer si une différence entre la période de temps indiquée par ledit compteur (CENSTJB) et la valeur de remise à l'état initial prédéterminée dépasse une valeur de temps prédéterminé, lorsque le signal d'impulsion est détecté (étape 116 de la figure 8; étape 318 de la figure 12; étape 518 de la figure 14) ; et
b) à fermer ladite valve de décharge (23) lorsque ladite différence est supérieure à ladite valeur de temps prédéterminée (étape 122 de la figure 8; étape 324 de la figure 12; étape 524 de la figure 14) ;
ledit procédé de contrôle d'injection de carburant comprenant en outre l'étape consistant :
c) à empêcher l'exécution de l'étape b) jusqu'à ce que la période de temps, indiquée par ledit compteur (CENSTJB), indique un intervalle entre deux signaux d'impulsion adjacents qui sont, tous les deux, générés par le mécanisme de génération de signal d'impulsion (7, 35) (étapes 106, 108, 114 et 120 de la figure 8; étapes 308 à 316 et 322 de la figure 12; étapes 402 à 406 de la figure 13 et étapes 500, 502 et 512 à 516 de la figure 14).

2. Le procédé de contrôle d'injection de carburant selon la revendication 1, **caractérisé en ce que** l'étape c) comprend l'étape consistant :
c-1) à empêcher l'exécution de l'étape b) jusqu'à ce qu'au moins deux signaux d'impulsion aient été détectés (étapes 106, 108, 114 et 120 de la figure 8; étapes 308 à 316 et 322 de la figure 12; étapes 402 à 406 de la figure 13 et étapes 500, 502 et 512 à 516 de la figure 14).

3. Le procédé de contrôle d'injection de carburant selon la revendication 2, dans lequel ledit mécanisme de génération de signal d'impulsion (7, 35) ne génère aucun signal d'impulsion durant la période de temps correspondant à une plage angulaire prédéterminée dudit vilebrequin (40),
**caractérisé en ce que** :
l'étape c-1) comprend les étapes consistant
c-1-1) à mémoriser la valeur de temps dudit compteur en tant que dernière valeur de temps, à un instant où ledit signal d'impulsion a été détecté (étape 106 de la figure 8) ;
c-1-2) à comparer la dernière valeur de temps mémorisée au dernier moment, avec la valeur de temps actuelle dudit compteur, de manière à déterminer si le rapport entre la valeur de temps actuelle et la dernière valeur de temps est supérieur à un rapport prédéterminé (étape 108 de la figure 8) ; et
c-1-3) à empêcher l'exécution de l'étape b) jusqu'à ce que ledit rapport obtenu à l'étape c-1-2) dépasse ledit rapport prédéterminé (étapes 114 et 120 de la figure 8).

4. Le procédé de contrôle d'injection de carburant selon la revendication 1, **caractérisé en ce que** l'étape c) comprend l'étape consistant:
c-2) à rendre la période de temps, comptée par ledit compteur (CENSTJB), comme étant une période de temps efficace après qu'au moins un signal d'impulsion ait été détecté après le début de l'opération de démarrage dudit moteur Diesel (étapes 402 à 406 de la figure 13 et étapes 500, 502 et 512 à 526 de la figure 14),
dans lequel ladite différence de l'étape a) est obtenue en se basant sur ladite période de temps efficace et ladite valeur prédéterminée de remise à l'état initial.
